(19) Europäisches Patentamt
European Patent Office
Office européen des brevets

(11) EP 4 708 203 A1

(12) **EUROPEAN PATENT APPLICATION**

(43) Date of publication:
**11.03.2026 Bulletin 2026/11**

(21) Application number: **25200417.1**

(22) Date of filing: **05.09.2025**

(51) International Patent Classification (IPC):
**G06T 13/40** (2011.01)

(52) Cooperative Patent Classification (CPC):
**G06T 13/40; G06T 2210/56**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.09.2024 GB 202413005**

(71) Applicant: **Sony Interactive Entertainment Inc.
Tokyo 108-0075 (JP)**

(72) Inventors:
• **SMITH, Alexei Ashton Derek
London, W1F 7LP (GB)**
• **HAFFIE, Kylan
London, W1F 7LP (GB)**
• **DIXON, Alex
London, W1F 7LP (GB)**

(74) Representative: **Fish & Richardson P.C.
Highlight Business Towers
Mies-van-der-Rohe-Straße 8
80807 München (DE)**

(54) **A METHOD OF ANIMATING POINT CLOUD DATA OF A SCENE, AND A SYSTEM THEREFOR**

(57) A computer-implemented method of animating point cloud data of a scene, comprising the steps of: obtaining the point cloud data of the scene, wherein the scene comprises an object; obtaining moving image data of the scene, the moving image data depicting movement of the object within the scene; identifying, using the moving image data, moving parts of the object; identifying, from the point cloud data, sets of points corresponding to the moving parts of the object; and generating bone data associated with the point cloud data, wherein the bone data defines bones that are each linked to a respective set of points such that, when in use, movement of the bones causes movement of the sets of points, thereby animating the point cloud data.

Obtain point cloud data

S100

Obtain moving image data

S102

Identify moving parts

S104

Identify sets of points

S106

Generate bone data

S108

FIG. 1

## Description

### FIELD OF THE INVENTION

The present invention relates to a method of animating point cloud data of a scene, and a system therefor.

### BACKGROUND

The use of meshes to represent three-dimensional (3D) models and scenes has been commonplace in computer graphics since the birth of the field, due to their conceptual simplicity and ease of rasterisation. However, other representations, such as 3D "splatting" rendering techniques, have recently come to the fore. Such representations are known as "radiance fields" - 3D functions (fields) that evaluate colours and brightnesses (that is, radiances) of particular points in a 3D scene.

3D Gaussian splatting (3DGS) is a radiance field-based rendering technique in which a scene is represented by the summation of many 3D Gaussian functions, distributed throughout 3D space. These individual functions are commonly known as "points" or "splats", which together form a data structure which resembles a point cloud. Summing up the colour of each individual splat and the level of opacity defined by its respective Gaussian function results in an image that can be displayed to the user. The placement of individual splats can be done by a designer or developer, or can be generated by a machine learning process based on some input image, scene, mesh or concept.

However, animating point cloud data or Gaussian splat data is challenging because there is typically no data stored about the relationship between points. While 3DGS has been used to depict moving objects, this has only so far been achieved by imaging a real-world object moving within a real-world scene, and subsequently generating, for each frame of the captured image data, a respective (that is, separate and independent) set of Gaussian splat data.

In this case, it will be appreciated that the motion of the object depicted by this sequence of Gaussian splat datasets is limited to that of the object which was initially imaged. However, in fields such as video game development and animated film development, the motions/animations of objects/characters in the video game/film are typically created/adjusted by developers, and so the desired motions/animations may be different from object motions captured by an imaging device (as part of a motion capture session, for example).

Thus there is a need in the art to animate point cloud data and/or Gaussian splat data, and thereby enable users (such as game/film developers) to create/adjust motions of objects depicted by the point cloud data or Gaussian splat data.

The present invention seeks to address this need.

### SUMMARY OF INVENTION

In a first aspect, there is provided a computer-implemented method of animating point cloud data of a scene, comprising the steps of: obtaining the point cloud data of the scene, wherein the scene comprises an object; obtaining moving image data of the scene, the moving image data depicting movement of the object within the scene; identifying, using the moving image data, moving parts of the object; identifying, from the point cloud data, sets of points corresponding to the moving parts of the object; and generating bone data associated with the point cloud data, wherein the bone data defines bones that are each linked to a respective set of points such that, when in use, movement of the bones causes movement of the sets of points, thereby animating the point cloud data.

Optionally, the method comprises the steps of: adjusting a pose of a bone, thereby adjusting a pose of the set of points to which the bone is linked; and rendering the point cloud data to obtain an output image of the object in the adjusted pose.

Optionally, the method comprises the step of displaying the output image.

Optionally, the bone data comprises adjustable bone parameters, and the method comprises iteratively performing the following steps until a termination criterion is met: adjusting a pose of a bone, thereby adjusting a pose of the set of points to which the bone is linked; rendering the point cloud data to obtain an output image of the object in the adjusted pose; calculating a difference between the output image and the moving image data; and updating the adjustable bone parameters based on the calculated difference; wherein the termination criterion is met when the calculated difference is less than a threshold value.

Optionally, the adjustable bone parameters comprise one or more of: a number of bones; a density of bones; a size of a given bone; a pose of a given bone relative to the set of points to which a given bone is linked; a rotation of a given bone; a connection between a given bone and another bone; the set of points to which a given bone is linked; and a weighting defining an extent to which movement of a given bone affects movement of a given point in the set of points to which the given bone is linked.

Optionally, the rendering step is carried out by using a differentiable rasteriser.

Optionally, the calculating step comprises calculating a loss function based on the gradients obtained via the differentiable rasterization.

Optionally, the method follows a gradient descent optimisation algorithm to obtain adjustable bone parameters meeting the termination criterion.

Optionally, the gradient descent optimisation algorithm is carried out by using a machine learning model.

Optionally, the gradient descent optimisation algorithm is a stochastic gradient descent optimisation algorithm.

Optionally, the step of obtaining the point cloud data of the scene comprises: obtaining static image data of the scene, wherein the static image data comprises a plurality of images from different viewpoints, wherein the static image data depicts the object as being static within the scene; and generating the point cloud data of the scene based on the static image data.

Optionally, the step of generating the point cloud data is carried out by using a Structure from Motion algorithm.

Optionally, the point cloud data is Gaussian splat data.

Optionally, the step of generating the Gaussian splat data (point cloud data) is carried out by using a machine learning model, wherein a Neural Radiance Field algorithm is used to train the machine learning model.

Optionally, the same machine learning model is used to carry out the step of generating the point cloud data and to obtain adjustable bone parameters meeting the termination criterion.

In a second aspect, there is provided a computer program comprising processor-implementable instructions which, when executed by a processor, cause the processor to perform the method of the first aspect.

In a third aspect, there is provided a non-transitory computer-readable storage medium having stored thereon the computer program of the second aspect.

In a fourth aspect, there is provided a system for animating point cloud data of a scene, comprising a processor and a memory, the memory having stored thereon processor-implementable instructions which, when executed by the processor, cause the processor to perform the method of the first aspect.

## BRIEF DESCRIPTION OF DRAWINGS

Embodiments of the present description will now be described by way of example with reference to the accompanying drawings, in which:

- Figure 1 is a flowchart illustrating a computer-implemented method according to embodiments of the present description;
- Figure 2 schematically illustrates a rigged virtual element;
- Figure 3 is a flowchart illustrating a computer-implemented method according to embodiments of the present description; and
- Figure 4 schematically illustrates a system according to embodiments of the present description.

## DETAILED DESCRIPTION

A computer-implemented method of animating point cloud data of a scene, and a system therefor are disclosed. In the following description, a number of specific details are presented in order to provide a thorough understanding of the embodiments of the present description. It will be apparent, however, to a person skilled in the art that these specific details need not be employed to practice the present invention. Conversely, specific details known to the person skilled in the art are omitted for the purposes of clarity where appropriate.

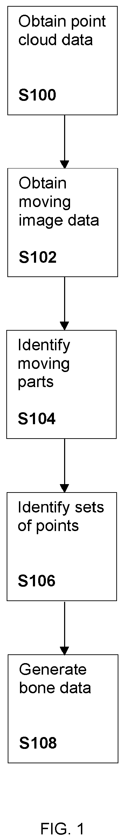

Turning now to Figure 1, in embodiments of the present description, a computer-implemented method of animating point cloud data of a scene, comprising the steps of: obtaining (S100) the point cloud data of the scene, wherein the scene comprises an object; obtaining (S102) moving image data of the scene, the moving image data depicting movement of the object within the scene; identifying (S104), using the moving image data, moving parts of the object; identifying (S106), from the point cloud data, sets of points corresponding to the moving parts of the object; and generating (S108) bone data associated with the point cloud data, wherein the bone data defines bones that are each linked to a respective set of points such that, when in use, movement of the bones causes movement of the sets of points, thereby animating the point cloud data.

It should be noted that in the context of the present description, the term, "the object in the scene" may refer to an animate object (a human, an animal, or the like) or an inanimate object (a door, a box, or the like).

As mentioned previously, there is a need in the art to animate point cloud data or Gaussian splat data. Embodiments of the present description address this need by providing a method where a set of bones (also known as a rig) may be constructed for, and subsequently used to rig, sets of points of the point cloud data that have been identified as corresponding to moving parts of the object.

More specifically, embodiments of the present description enable users to input point cloud data of a scene they wish to animate to a computing system which automatically identifies parts of the point cloud data (that is, sets of points) as corresponding to moving parts of the object (limbs of a human/animal in the scene, for example), constructs (that is, generates) a set of bones, and rigs (that is, links/associates) parts of the point clouds with the bones.

The user is subsequently provided with a rigged version of the point cloud data for subsequent use in virtual object/character (that is, virtual element) animation. This way, users may animate point cloud data in a manner similar to that of animation methods known currently, such as rigging.

As will be appreciated by persons skilled in the art, the term "rigging" (also known as "skeletal animation") refers to a method of animating virtual elements (that is, virtual objects/characters) where parts of the virtual objects/characters are made to move via manipulation of parts of their "rigs".

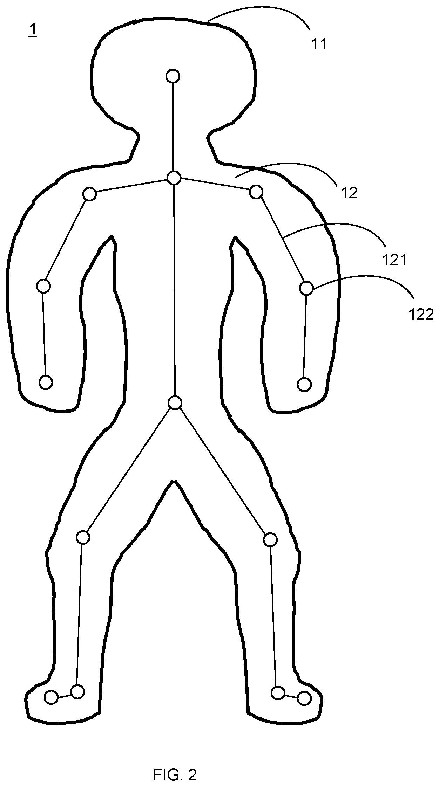

Turning now to Figure 2, in rigging methods known heretofore, mesh 11 of virtual element 1 defines the shape and size of the virtual element, and is typically referred to as its "skin". Rig 12 of virtual element 1 may therefore be thought of as its skeleton - while rig 12 contains a set of bones 121 connected together via joints 122, this set of bones 121 does not necessarily contain the same number, sizes, and/or shapes of bones of a human, animal, or other vertebrate. Rig 12 of virtual element 1 is typically enveloped by skin 11, and parts of skin 11 are associated with respective bones 121 of rig 12 such that motion/re-positioning of a given bone 121 causes motion/re-positioning of the part of skin 11 associated therewith. Bones typically possess the shape of a straight line, but other bone shapes are also contemplated within the scope of the present invention.

As will be appreciated by the persons skilled in the art, embodiments of the present description seeks to enable users to animate point cloud data in a similar manner to how meshes are animated via the rigging method. Alternatively put, embodiments of the present description seeks to process point cloud data into a format where it can be manipulated in a similar manner to how skin 11 is manipulated via manipulation of bones 121 or joints 122 of rig 12.

*Point cloud data*

As will be appreciated, before the point cloud data or Gaussian splat data can be animated, it must first be obtained.

Therefore, in embodiments of the present description, the method comprises the step of obtaining the point cloud data of the scene, wherein the scene comprises an object (step S100). It should be noted that the object in the scene may be animate (a human, an animal, or the like) or inanimate (a door, a box, or the like).

Optionally, the point cloud data may be Gaussian splat data. As mentioned previously, Gaussian splat data has a similar format to that of point cloud data, as both types of data comprise a plurality of points. However, whereas the points of point cloud data may collectively indicate the surface geometry of a virtual object/scene (by virtue of the points' coordinates within the virtual space), the points (or splats) of Gaussian splat data may additionally include visual attributes such as position, size/scale/stretch (which may be represented as a single scale matrix, for example), reflectance, opacity, or the like.

As mentioned previously, the splats of the Gaussian splat data may comprise a 3D Gaussian function. However, in general, the splats may comprise any 3D function, for instance, an exponential function, a polynomial function, or a logarithmic function, a Gaussian function, or indeed any combination of the above. Moreover, different types of function may be used for the different splats of the Gaussian splat data, in order to generate varied visual effects, or the same type of function may be used for every splat.

Typically, a 3D function may be used to define the so-called "rendering extent" of the splat, that is, the visibility, shape, and/or size of the to-be-rendered splat.

The Gaussian function, often referred to simply as a Gaussian, is a mathematical function of the form

$$f(x) = \exp(-x^2),$$

where exp represents the exponential function. Such a Gaussian may be parametrised with various (real) constants in one dimension, giving the form

$$f(x) = a \exp(-(x - b)^2/c)$$

where a and b are arbitrary real constants, and c is an arbitrary non-zero real constant. The Gaussian may be extended into three dimensions with a parametrisation

$$f(x) = a \exp\left(-\frac{1}{2} x^T \Sigma^{-1} x\right)$$

where a is an arbitrary real constant, x is a 3D vector, $x^T$ is the transposition of x, and $\Sigma^{-1}$ is the inverse of a positive-definite $3 \times 3$ matrix.

The use of 3D Gaussians for the splats of the Gaussian splat data has several advantages. The Gaussian is a function with a well-known and easily calculable derivative, which allows for efficient optimization of the Gaussian splat data to a desired input image. Further, Gaussians can be easily projected to the 2D plane, allowing for efficient rasterization and rendering of the final image.

Each of the splats in the Gaussian splat data may further comprise colour data defining colour over the extent. The colour may be a uniform value over the entire range of the 3D function of the splat, such as specified by RGB values, HSV values or similar. These values may be encoded as floating splat, rational or integer values. The colour may further comprise an alpha channel, being encoded by RGBA values, HSVA values or similar, allowing for transparent or semi-transparent colours.

Alternatively, the colour may not be uniform over the range of the 3D function of the splat. The colour may be defined by a function, such as a 1D function, 2D function or 3D function, such as a 3D function of position. This allows for the use of larger splats to create an equivalent image.

The use of a colour function that maps to the surface of an ellipsoid like a Gaussian simplifies the implementation and allows for colours to be defined with respect to the viewing angle of the splat. Therefore, in some examples, the colour data comprises a spherical harmonic, and may be defined as a sum of spherical harmonics with varying coefficients. The coefficients may be 3D or 4D colour vectors, such as RGB or RGBA representations.

In any case, this point cloud data or Gaussian splat data may be obtained from a computing system that is separate from the computing system used to perform the method (via wired or wireless communication methods such as USB, Ethernet ®, Wi-Fi ®, Bluetooth ®, or the like). Alternatively or in addition, the point cloud data or Gaussian splat data may be obtained from an internal memory/storage device of and/or an external memory/storage device connected to the computing system used to perform the method (a RAM, ROM, external or internal hard drive, or an external or internal solid-state drive, or the like). This is to say that in embodiments of the present description, the point cloud data or Gaussian splat data may already be generated and stored in a memory/storage device/computing system, and so obtaining step S100 may comprise receiving/retrieving the point cloud data or Gaussian splat data from this memory/storage device/computing system.

Alternatively or in addition, obtaining step S100 may comprise the steps of obtaining static image data of the scene, the static image data comprises a plurality of images from different viewpoints, wherein the static image data depicts the object as being static within the scene; and generating the point cloud data of the scene based on the static image data.

As will be appreciated, this static image data may be received/retrieved from a memory/storage device/computing system, and/or may be received from an imaging device capturing the scenic image data, for example.

As a non-limiting example of generating the point cloud data based on the static image data, algorithms such as "Structure from Motion" or "SfM" and/or techniques such as "Simultaneous Localisation and Mapping" or "SLAM" may be used to generate a 3D point cloud representation of the imaged scene and object. Hence more generally, the step of generating the point cloud data may be carried out by using a Structure from Motion algorithm (or SLAM techniques).

Where the point cloud data is Gaussian splat data, a machine learning model may be used as part of a "Neural Radiance Fields" or "NeRF" method to determine attributes (position, size, scale, stretch, reflectance, opacity, or the like) for splats making up the 3D point cloud representation, these attributes being encoded as spherical harmonics, for example. Hence more generally, where point cloud data (to be generated) is Gaussian splat data, the step of generating the point cloud data may be carried out by using a machine learning model, wherein a Neural Radiance Field algorithm is used to train the machine learning model.

SfM, SLAM and NeRF methods and algorithms are well-known to persons skilled in the art, and so shall not be discussed further herein.

*Moving image data*

In embodiments of the present description, the method comprises the step of obtaining moving image data of the scene, the moving image data depicting movement of the object within the scene (step S102).

As will be appreciated, this moving image data may be received/retrieved from a memory/storage device/computing system, and/or may be received from an imaging device capturing the moving image data.

The moving image data may be a single image (that is, a still image) depicting the object in a different pose to that depicted in the point cloud data. For example, the point cloud data may depict a human (an object) in a standing pose with their arms by their sides, whereas the single image may depict the same human in the same standing pose but raising one of their arms above their head.

The moving image data may be a sequence of image frames depicting the object in motion. For example, the point cloud data may depict a human (an object) in a standing pose with their arms by their sides, whereas the sequence of image frames may depict the same human as running, jumping, or the like.

It should be noted that within the context of the present description, the term "pose" should be taken to mean a position, shape, size and/or orientation of the object. As an example, a first pose of a human may correspond to standing in the centre of the scene face-on to the camera/viewpoint, and a second pose may correspond to crouching (different shape and size) at the side of the scene (different position) with their back facing the camera/viewpoint (different orientation).

As shall be described later herein, the moving image data may be used as reference data to identify parts of the point cloud data (that is, sets of points) that correspond to moving parts of the object (and optionally to constrain motions of the rigged point cloud data).

*Moving parts of the object*

In embodiments of the present description, the method comprises the step of identifying, using the moving image data, moving parts of the object (step S104). As will be appreciated, identifying step S104 may be carried out by a processor (configured by way of software instructions, for example) of a computing system.

As a non-limiting example of identifying step S104, the moving image data may be analysed to detect the object depicted therein, as well as the object's size and/or shape (in a frame of moving image data). This may be achieved using any (combination of) object recognition and/or computer vision methodologies/algorithms (details of which are well-known to the skilled person, and so shall be omitted from the present description for the sake of brevity).

This detected object size/shape may be compared with that detected in the point cloud data (in the case where the moving image data is a still image), or compared with that detected in a different frame of the moving image data (in the case where the moving image data is a sequence of image frames), or compared with that depicted in static image data (in the case where point cloud data is being generated in step S100).

For example, a human may be detected in a still image (of the moving image data), as well as the size and shape of the human (which may indicate the pose adopted by the human in the moving image data). This size and shape of the human may be compared to that depicted in the point cloud data (which defines the surface geometry of the human), and any differences in the sizes and shapes which exceed a threshold may be used to identify moving parts of the object.

For example, the point cloud data may depict the human in a standing pose with their arms by their sides, whereas the single image of moving image data may depict the same human in the same standing pose but raising one of their arms above their head. By comparing the surface geometry of the point cloud data and the size and shape of the human in the moving image data, it may be found that a part of the moving image data depicting one of the arms of the human is a moving part of the object, as the difference in this part's size and shape compared to that depicted in the point cloud data is greater than a threshold amount (due to the arm being raised in the former and not in the latter).

Optionally, a two-dimensional (2D) projection of the point cloud data from a substantially identical viewpoint to that used to capture the moving image data may be generated/rendered. This way, a more direct comparison between point cloud data and the moving image data may be achieved, as both sets of data may possess the same dimensionality. As a non-limiting example, the point cloud data may be rendered (from a substantially identical viewpoint as that used to capture the moving image data) using a differentiable rasteriser while setting the moving image data as the target image to be replicated - such differentiable rasterisers are typically used to generate Gaussian splat data from static image data. Any above threshold gradients (between rendered and target images) obtained via the differentiable rasterization of the point cloud data may be used to detect the moving parts of the object.

Optionally, where static image data is used to generate the point cloud data in step S100, this static (2D) image data may be compared with the still image to detect moving parts of the object.

It should be noted that where the point cloud data is Gaussian splat data, visual attributes of the splats may be used in like manner to identify moving parts of the object. For example, the colours of the splats may be similarly compared with that of the pixels of the moving image to identify differences in the shapes and sizes of (that is, poses adopted by) the human. For example, the human may be wearing a blue jacket. In this case, the locations of blue splats and blue pixels may be compared, and above-threshold differences in such locations may be used to identify moving parts of the object (one of their arms, for example).

As will be appreciated, a similar process (that is, a comparison between point cloud data and moving image data) may be carried out in the case where the moving image data is a sequence of image frames. Alternatively or in addition, the image frames in the sequence may be compared with each other, and any above threshold differences in the shape and/or size of the object between image frames may be used to identify moving parts of the object. This is to say that where a sequence of image frames is provided as moving image data, then the identification of moving parts of the object may be carried out by using the sequence of image frames alone (for example, a comparison between such image frames), or may optionally be carried out by using image frames and point cloud data (for example, a comparison between image frames and point cloud data).

In any case, once moving parts of the object are identified, corresponding parts of the point cloud data (sets of points) may be identified.

*Sets of points*

In embodiments of the present description, the method comprises the step of identifying, from the point cloud data, sets of points corresponding to the moving parts of the object (step S106). As will be appreciated, identifying step S106 may be carried out by a processor (configured by way of software instructions, for example) of a computing system.

As will be appreciated, identifying step S106 may be carried out via the aforementioned comparison between point cloud data and moving image data - any differences in the sizes and shapes (or gradients) which exceed a threshold may be used to identify sets of points (that is, parts of the point cloud data) which correspond to moving parts of the object. For example, the aforementioned difference in the human's arm pose between point cloud data and moving image data may be used to identify the set of points describing the surface geometry of the human's arm corresponding to the human's arm (that is, the moving part of the object).

Optionally, a two-dimensional (2D) projection of the point cloud data from a substantially identical viewpoint to that used to capture the moving image data may be generated/rendered. This way, a more direct comparison between point cloud data and the moving image data may be achieved, as both sets of data may possess the same dimensionality (the aforementioned use of differentiable rasterization is a non-limiting example of this). Subsequently, parts of the projected/rendered point cloud data may be identified as corresponding to moving parts of the object, and the geometric relationship between the 3D point cloud data and its 2D projection/rendering (namely, the viewpoint used to generate the 2D projection/rendering) may be used to identify sets of points in the 3D point cloud data which corresponding to the moving parts of the object.

It should be noted that where the point cloud data is Gaussian splat data, visual attributes of the splats may be used in like manner to identify sets of points. For example, the colours of the splats may be similarly compared with that of the pixels of the moving image to identify differences in the shapes and sizes of (that is, poses adopted by) the human. For example, the human may be wearing a blue jacket. In this case, the locations of blue splats and blue pixels may be compared, and above-threshold differences in such locations may be used to identify sets of points (corresponding to one of their arms, for example).

As will be appreciated, given that similar techniques/methodologies may be employed in identifying steps S104 and S106, such steps may optionally be performed at the same time (that is, as one identifying step).

In any case, once parts of the point could data have been identified as corresponding to moving parts of the object, a set of bones for rigging those parts of the point cloud data may be generated.

*Generating bone data*

In embodiments of the present description, the method comprises the step of generating bone data associated with the point cloud data, wherein the bone data defines bones that are each linked to a respective set of points such that, when in use, movement of the bones causes movement of the sets of points, thereby animating the point cloud data (step S108). As will be appreciated, generating step S108 may be carried out by a processor (configured by way of software instructions, for example) of a computing system.

As mentioned previously, a set of bones (rig 12) is typically used in rigging/skeletal animation to manipulate parts of skin 11 of virtual element 1 (skin 11 typically being in the form of a mesh heretofore). Rig 12 is typically enveloped by skin 11, and parts of skin 11 are associated with respective bones 121 of rig 12 such that motion/re-positioning of the latter (effected by the user, for example) results in motion/re-positioning of the former. Embodiments of the present description seek to process point cloud data into a format where it can be manipulated in a similar manner to how skin 11 is manipulated via manipulation of bones 121 or joints 122 of rig 12.

As a non-limiting example of generating step S108, the generation of bones may be based on the location and/or geometry of the respective parts of the point cloud data (that is, sets of points). For example, a centroid of a given identified set of points may be calculated based on the locations of the points within the identified set of points, and a bone which passes through the centroid may be generated.

Optionally, determining the pose of the generated bone similarly be based on the location and/or geometry of the identified set of points. For example, the pose of the bone may be determined using a linear regression model or least squares approach on the coordinates of the points in the identified set of points.

Optionally, the bone data may define joints connecting bones together. The location of these joints may be determined based on the locations at which neighbouring identified sets of points meet/abut each other, for example. As will be appreciated, such joints may be used to determine the poses of bones (alternatively or in addition to using centroids, linear regression, least squares, or whichever other algorithm skilled persons deem appropriate). For example, a joint typically defines one end of a bone (the end which is rotatably coupled to another bone, for example). As such, bone may be generated such that one end coincides with the location of the generated joint.

It may be desirable to limit the number and/or density of bones and/or joints which are generated, as otherwise, the amount of manual labour required to subsequently animate the point cloud data (via bone/joint manipulation) will increase. As will be appreciated, bone density here refers to the number of bones generated in a given volume of virtual space.

Thus optionally, in embodiments of the present description, generating step S108 may comprise generating bone data which comprises a number and/or density of bones (and optionally joints) which is less than that of a predefined limit. This predefined limit may be user-defined, or may be determined based on the number and/or density of points in the point cloud data, the number and/or density of identified sets of points in the point cloud data, or the like, for example.

Once the bones are generated, they are then linked to respective sets of points of the point cloud data. This procedure may be thought of as analogous to skinning, where the parts of a mesh are linked to respective bones of the rig.

The linking may be effected by associating metadata/tags to the points of the point cloud data. For example, a given point may be associated with a tag which identifies the bone to which the given point is linked. As with conventional skinning, the link between a given point and its respective bone is such that movement of the bone causes movement of the given point.

Optionally, the given point's tag may comprise a weighting defining the extent to which movement of the bone should affect movement of the given point. This may be beneficial in the case where a point is contained in two overlapping sets of points (such as in a knee or elbow of a human depicted in the point cloud data).

In any case, once the bone data is generated, the resulting dataset (that is, the point cloud data in conjunction with the bone data) may be used by game and film developers to animate the point cloud data.

*Rendering animated point cloud data*

As will be appreciated, the resulting dataset (hereafter "rigged point cloud data") is in a similar format to that used in conventional rigging techniques, animating the resulting dataset may be carried out in a similar manner to how meshes are animated - game and film developers may manipulate the bones (and joints) of the bone data to move parts of the rigged point cloud data, thereby animating the point cloud. As will be appreciated, this animated/manipulated point cloud data may subsequently be rendered for display to the game/film developer (for review) or to end users of the video game/film (for interaction).

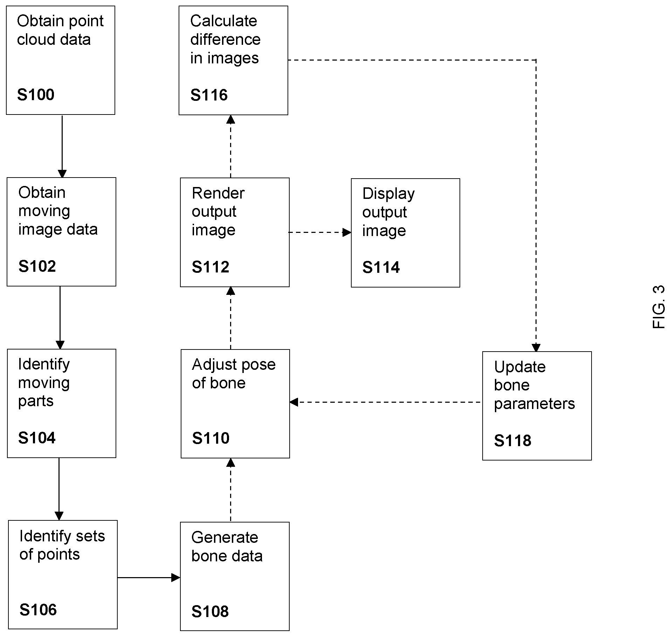

Hence more generally, and turning now to Figure 3, in embodiments of the present description, the method may comprise the steps of: adjusting a pose of a bone, thereby adjusting a pose of the set of points (corresponding to moving parts of the object) to which the bone is linked (step S110); and rendering the point cloud data to obtain an output image of the object in the adjusted pose (step S112).

As will be appreciated, adjusting step S110 may be enacted by the game/film developers. Alternatively or in addition, adjusting step S110 may be enacted by end users. For example, as part of a video game, there may be rigged point cloud data of an in-game character, and the character may perform a jumping animation in response to the end user providing a controller input to the game console executing the video game. The jumping animation may have been defined by a game developer adjusting the appropriate bones before release of the video game, and the end user may trigger the define jumping animation (and thus another instance of bone adjustment) when they provide controller inputs to the video game console.

In any case, the output image may be displayed (via a display screen, for example) to the user (the game/film developer or the end user, for example). Hence more generally, in embodiments of the present description, the method may comprise the step of displaying the output image (step S114).

*Optimising bone data*

As will be appreciated, the generated bone data may enable manipulations of the rigged point cloud data in ways that do not correspond to the movements of the object in the moving image data. Optionally, the bone data may be optimised such that the movements of bones (and joints) may be constrained to mimic/resemble that movements of the object as depicted in the moving image data.

In the latter case, the rendered output image (of the object in the adjusted pose) may be compared with the moving image data to determine a difference between the pixel values thereof (which may have arisen due to the differences in the poses of the object between such images, for example). Subsequently, the generated bone data may be updated based on this determined difference. For example, parameters such as the number-/density of bones/joints used in the bone data, or the locations, poses and/or rotations of bones in the bone data, or the like, may be updated based on the difference.

Once the bone data is updated, a pose of a bone may be adjusted (as in adjusting step S110), a new output image may be rendered (as in rendering step S112), and this new output image may be compared with the moving image data to determine a difference between the poses of the object. As will be appreciated, this cycle may continue in an iterative fashion until the difference between the poses in the rendered output image and the moving image data is less than a threshold value.

Hence more generally, in embodiments of the present description, the bone data comprises adjustable bone parameters, and the method comprises iteratively performing the following steps until a termination criterion is met: adjusting a pose of a bone, thereby adjusting a pose of the set of points to which the bone is linked (step S110); rendering the point cloud data to obtain an output image of the object in the adjusted pose (step S112); calculating a difference between the output image and the moving image data (step S116); and updating the adjustable bone parameters based on the calculated difference (step S118); wherein the termination criterion is met when the calculated difference is less than a threshold value.

The adjustable bone parameters may optionally be one or more of: a number of bones; a density of bones; a size of a given bone; a pose of a given bone relative to the set of points to which a given bone is linked (an "initial pose" of the bone within the rig, for example); a rotation of a given bone (about a joint or about the given bone's axis); a connection between a given bone and another bone (that is, a joint); the set of points to which a given bone is linked (tags for linking the given bone with points may be added or removed from points, for example); and a weighting defining an extent to which movement of a given bone affects movement of a given point in the set of points to which the given bone is linked (as mentioned previously).

As will be appreciated, the comparison techniques/methodologies described with respect to identifying steps S104 and S106 may be employed in calculating step S116. For example, computer vision algorithms may be employed to detect the object (and its poses) in the rendered output image and the moving image data.

Optionally, rendering step S112 may be carried out by using a differentiable rasteriser (such as a differentiable tile-based rasteriser, for example). Similarly to identifying steps S104 and S106, the rigged and adjusted point cloud data may be rendered (from a substantially identical viewpoint as that used to capture the moving image data) using a differentiable rasteriser while setting the moving image data as the target image to be replicated. However, the gradients (between rendered and target images) obtained via the differentiable rasterization of the point cloud data may be used as the difference for updating the adjustable bone parameters.

For example, calculating step S116 may comprise calculating changes in adjustable bone parameters based on the gradients obtained via the differentiable rasterization. For example, magnitude of a change in an initial pose of a given bone (corresponding to a part of the object) may be calculated based on the magnitude of the gradient obtained in the region of the rendered output image comprising the part of the object. For example, where the object is a human, the magnitude of a change in the initial pose of an arm bone may be determined based on the magnitude of the gradient obtained in the region of the differentiably rasterised image which depicts the human's arm. Similarly, direction of a change in an initial pose of a given bone (corresponding to a part of the object) may be calculated based on the direction of the gradient obtained in the region of the rendered output image comprising the part of the object. In this case, updating step S118 may comprise applying the calculated (magnitudes and directions of) changes in the adjustable bone parameters to the prevailing values of the adjustable bone parameters, thereby obtaining new parameters for the next iteration.

To further refine the updating/optimisation of bone data, calculating step S116 may optionally comprise calculating a loss function based on the gradients obtained via the differentiable rasterization (carried out by the differentiable rasteriser). As will be appreciated, this loss function may be used as part of any optimisation algorithm (seeking to minimise the loss function) skilled persons in the art deem appropriate. For example, the method may optionally follow a gradient descent optimisation algorithm to obtain adjustable bone parameters meeting the termination criterion. For example, steps S110-S118 (or any applicable combination thereof) may be form part of such a gradient descent optimisation algorithm. Alternatively or in addition, other optimisation algorithms may be employed.

As will be appreciated, determining changes in values for certain adjustable bone parameters may not easily be carried out via the use of formulae. For example, the rotation of a given bone, the number of points to which a given bone is linked may not so easily be related to the gradients obtained from differentiable rasterized images via predetermined/preconceived mathematical relationships. In such case, a machine learning model may be employed to minimise the loss function, and thus learn the optimal values of the adjustable bone parameters (that is, obtain adjustable bone parameters meeting the termination criterion).

As will be appreciated, gradient descent is typically employed in the training process of machine learning models. Hence, the gradient descent optimisation algorithm may be carried out by using a machine learning model. In this case, preferably, a stochastic gradient descent optimisation algorithm may be used to train the machine learning model to minimise the loss function.

As will be appreciated, where embodiments of the present description comprise the generation of Gaussian splat data from static image data by using a machine learning model, this same machine learning model may also be employed to carry out the iteratively updating step. This may be preferable in that the rigging of Gaussian splat data may be made simpler, as sets of static and moving image data may be input to a single machine learning model, which then generates the Gaussian splat data and also rigs/animates said Gaussian splat data such that the Gaussian splat data may be manipulated to move in a manner which mimics/resembles the movement depicted in the moving image data.

In any case, the calculated difference (or gradients, loss functions, or the like) are used to update the adjustable bone parameters in step S118. Once the calculated difference falls below a threshold value, the iteratively updating step is terminated, and the latest set of the adjustable bone parameters are saved in the bone data, thereby resulting in a rig (set of bones) that is constrained to move in a manner which resembles the movement of the object in the moving image data.

*Computer Program and Storage Medium*

It will be appreciated that the above methods may be carried out on conventional hardware (such as computing system 1 of Figure 2) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

*System*

In embodiments of the present description, a system for animating point cloud data of a scene, comprising a processor and a memory, the memory having stored thereon processor-implementable instructions which, when executed by the processor, cause the processor to perform embodiments of the above-described method.

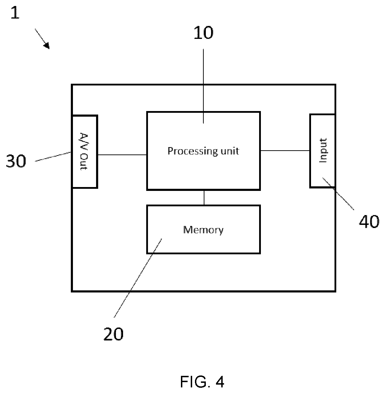

Turning now to Figure 4, as an example embodiment of the present invention, the system may be computing system 1. The circuitry of computing system 1 may comprise the following components listed in turn below.

Computing system 1 may comprise processing unit 10. Processing unit 10 may be a central processing unit (CPU) and/or a graphical processing unit (GPU). The CPU may be a single or multi core processor. The GPU may be physically separate to the CPU, or may be integrated with the CPU as a system on a chip (SoC). Processing unit 10 may be configured to execute processor-implementable instructions which cause it to carry out embodiments of the above-described method.

Computing system 1 may comprise memory 20. Memory 20 may be a RAM, ROM, and/or the like. The RAM may be physically separate to the CPU and/GPU, or may be integrated therewith as part of an SoC. Alternatively or in addition, memory 20 may be an external or internal hard drive, or an external or internal solid state drive. Memory 20 may be configured to store the processor-implementable instructions

Computing system 1 may comprise A/V output port 30. A/V output port 30 may enable computing system 1 to transmit audio/visual outputs to one or more other devices/systems. Examples of A/V output port 30 include USB ports, Ethernet ® ports, Wi-Fi ® ports, Bluetooth ® ports, and the like.

Computing system 1 may comprise input port 40. Input port 40 may enable computing system 1 to receive data from one or more other devices/systems. Examples of Input port 40 include USB ports, Ethernet ® ports, Wi-Fi ® ports, Bluetooth ® ports, and the like.

Where components of computing system 1 are not integrated, such components may be connected either by a dedicated data link or via an I/O bus.

It will be apparent to a person skilled in the art that variations in the operations of the above system corresponding to the various embodiments of the computer-implemented method as described and claimed herein are considered within the scope of the present invention.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## EMBODIMENTS

Although the present invention is defined in the claims, it should be understood that the present invention can also (alternatively) be defined in accordance with the following embodiments:

    1. A computer-implemented method of animating point cloud data of a scene, comprising the steps of:

    obtaining the point cloud data of the scene, wherein the scene comprises an object;
    obtaining moving image data of the scene, the moving image data depicting movement of the object within the scene;
    identifying, using the moving image data, moving parts of the object;
    identifying, from the point cloud data, sets of points corresponding to the moving parts of the object; and
    generating bone data associated with the point cloud data, wherein the bone data defines bones that are each linked to a respective set of points such that, when in use, movement of the bones causes movement of the sets of points, thereby animating the point cloud data.

2. A method according to embodiment 1, comprising the steps of:

    adjusting a pose of a bone, thereby adjusting a pose of the set of points to which the bone is linked; and
    rendering the point cloud data to obtain an output image of the object in the adjusted pose.

3. A method according to embodiment 2, comprising the step of displaying the output image.

4. A method according to embodiment 2 or embodiment 3, wherein the bone data comprises adjustable bone parameters, and the method comprises iteratively performing the following steps until a termination criterion is met:

    adjusting a pose of a bone, thereby adjusting a pose of the set of points to which the bone is linked;
    rendering the point cloud data to obtain an output image of the object in the adjusted pose;
    calculating a difference between the output image and the moving image data; and
    updating the adjustable bone parameters based on the calculated difference;
    wherein the termination criterion is met when the calculated difference is less than a threshold value.

5. A method according to embodiment 4, wherein the adjustable bone parameters comprise one or more of:

    i. a number of bones;
    ii. a density of bones;
    iii. a size of a given bone;
    iv. a pose of a given bone relative to the set of points to which a given bone is linked;
    v. a rotation of a given bone;

vi. a connection between a given bone and another bone;

vii. the set of points to which a given bone is linked; and

viii. a weighting defining an extent to which movement of a given bone affects movement of a given point in the set of points to which the given bone is linked.

6. A method according to embodiment 4 or embodiment 5, wherein the rendering step is carried out by using a differentiable rasteriser.

7. A method according to embodiment 6, wherein the calculating step comprises calculating a loss function based on the gradients obtained via the differentiable rasterization.

8. A method according to embodiment 7, wherein the method follows a gradient descent optimisation algorithm to obtain adjustable bone parameters meeting the termination criterion.

9. A method according to embodiment 8, wherein the gradient descent optimisation algorithm is carried out by using a machine learning model.

10. A method according to embodiment 9, wherein the gradient descent optimisation algorithm is a stochastic gradient descent optimisation algorithm.

11. A method according to any preceding embodiment, wherein the step of obtaining the point cloud data of the scene comprises:

obtaining static image data of the scene, wherein the static image data comprises a plurality of images from different viewpoints, wherein the static image data depicts the object as being static within the scene; and

generating the point cloud data of the scene based on the static image data.

12. A method according to embodiment 11, wherein the step of generating the point cloud data is carried out by using a Structure from Motion algorithm.

13. A method according to any preceding embodiment, wherein the point cloud data is Gaussian splat data.

14. A method according to embodiment 13 when dependent upon embodiment 11 or 12, wherein the step of generating the point cloud data is carried out by using a machine learning model, wherein a Neural Radiance Field algorithm is used to train the machine learning model.

15. A method according to embodiment 14 when dependent upon embodiment 9 or embodiment 10, wherein the same machine learning model is used to carry out the step of generating the point cloud data and to obtain adjustable bone parameters meeting the termination criterion.

16. A computer program comprising processor-implementable instructions which, when executed by a processor, cause the processor to perform the method of any one of embodiments 1 to 15.

17. A non-transitory computer-readable storage medium having stored thereon the computer program of embodiment 16.

18. A system for animating point cloud data of a scene, comprising a processor and a memory, the memory having stored thereon processor-implementable instructions which, when executed by the processor, cause the processor to perform the method of any one of embodiments 1 to 15.

**Claims**

1. A computer-implemented method of animating point cloud data of a scene, the method comprising:

obtaining (S100) the point cloud data of the scene, wherein the scene comprises an object;

obtaining (S102) moving image data of the scene, the moving image data depicting movement of the object within the scene;

identifying (S104), using the moving image data, moving parts of the object;

identifying (S106), from the point cloud data, sets of points corresponding to the moving parts of the object; and

generating (S108) bone data associated with the point cloud data, wherein the bone data defines bones that are each linked to a respective set of points such that, when in use, movement of the bones causes movement of the sets of points, thereby animating the point cloud data.

2. The method according to claim 1, further comprising:

adjusting (S110) a pose of a bone, thereby adjusting a pose of the set of points to which the bone is linked; and

rendering (S112) the point cloud data to obtain an output image of the object in the adjusted pose.

3. The method according to claim 2, further comprising displaying (S114) the output image.

**4.** The method according to any one of claims 2 or 3, wherein the bone data comprises adjustable bone parameters, and the method comprises iteratively performing the following steps until a termination criterion is met:

> adjusting (S110) a pose of a bone, thereby adjusting a pose of the set of points to which the bone is linked;
> rendering (S112) the point cloud data to obtain an output image of the object in the adjusted pose;
> calculating (S116) a difference between the output image and the moving image data; and
> updating (S118) the adjustable bone parameters based on the calculated difference;
> wherein the termination criterion is met when the calculated difference is less than a threshold value.

**5.** The method according to claim 4, wherein the adjustable bone parameters comprise one or more of:

> i. a number of bones;
> ii. a density of bones;
> iii. a size of a given bone;
> iv. a pose of a given bone relative to the set of points to which a given bone is linked;
> v. a rotation of a given bone;
> vi. a connection between a given bone and another bone;
> vii. the set of points to which a given bone is linked; and
> viii. a weighting defining an extent to which movement of a given bone affects movement of a given point in the set of points to which the given bone is linked.

**6.** The method according to any one of claims 4 or 5, wherein rendering the point cloud data to obtain an output image of the object in the adjusted pose is carried out using a differentiable rasteriser.

**7.** The method according to claim 6, wherein calculating the difference between the output image and the moving image data comprises calculating a loss function based on the gradients obtained via the differentiable rasterization, optionally wherein the method follows a gradient descent optimisation algorithm to obtain adjustable bone parameters meeting the termination criterion.

**8.** The method according to claim 7, wherein the gradient descent optimisation algorithm is carried out using a machine learning model, optionally wherein the gradient descent optimisation algorithm is a stochastic gradient descent optimisation algorithm.

**9.** The method according to any one of claims 1 to 8, wherein obtaining the point cloud data of the scene comprises:

> obtaining static image data of the scene, wherein the static image data comprises a plurality of images from different viewpoints, wherein the static image data depicts the object as being static within the scene; and
> generating the point cloud data of the scene based on the static image data.

**10.** The method according to claim 9, wherein generating the point cloud data is carried out using a Structure from Motion algorithm.

**11.** The method according to any one of claims 1 to 10, wherein the point cloud data is Gaussian splat data.

**12.** The method according to claim 11, when dependent upon claim 9 or 10, wherein generating the point cloud data is carried out using a machine learning model, wherein a Neural Radiance Field algorithm is used to train the machine learning model.

**13.** The method according to claim 12, when dependent upon claim 8, wherein the same machine learning model is used to generate the point cloud data and to obtain adjustable bone parameters meeting the termination criterion.

**14.** A computer program comprising processor-implementable instructions which, when executed by a processor, cause the processor to perform the method of any one of claims 1 to 13.

**15.** A system (1) for animating point cloud data of a scene, comprising a processor (10) and a memory (20), the memory (20) having stored thereon processor-implementable instructions which, when executed by the processor (10), cause the processor (10) to perform the method of any one of claims 1 to 13.

Obtain point
cloud data

**S100**

↓

Obtain
moving
image data

**S102**

↓

Identify
moving
parts

**S104**

↓

Identify sets
of points

**S106**

↓

Generate
bone data

**S108**

FIG. 1

FIG. 2

S100 Obtain point cloud data → S102 Obtain moving image data → S104 Identify moving parts → S106 Identify sets of points

S106 Identify sets of points → S108 Generate bone data ⇢ S110 Adjust pose of bone ⇢ S112 Render output image ⇢ S116 Calculate difference in images

S112 Render output image ⇢ S114 Display output image

S116 Calculate difference in images ⇢ S118 Update bone parameters ⇢ S110 Adjust pose of bone

FIG. 3

FIG. 4

Europäisches
Patentamt

European
Patent Office

Office européen
des brevets

# EUROPEAN SEARCH REPORT

**Application Number**

EP 25 20 0417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 557 074 B1 (GOOD MAX [US]) 17 January 2023 (2023-01-17) | 1-3, 9-12,14, 15 | INV. G06T13/40 |
| A | * abstract; figure 2 * <br> * column 8, line 63 - column 9, line 65; figure 5 * <br> * column 10, line 40 - column 12, line 67; figure 7 * <br> ----- | 4-8,13 | |
| X | US 2017/046865 A1 (CANTWELL BRIAN [US]) 16 February 2017 (2017-02-16) <br> * abstract * <br> * paragraphs [0045] - [0052]; figure 3 * <br> * paragraphs [0053] - [0058], [0064] - [0067]; figure 5 * <br> ----- | 1,14,15 | |
| A | TINGYANG ZHANG ET AL: "BAGS: Building Animatable Gaussian Splatting from a Monocular Video with Diffusion Priors", ARXIV.ORG, CORNELL UNIVERSITY LIBRARY, 201 OLIN LIBRARY CORNELL UNIVERSITY ITHACA, NY 14853, <br> 18 March 2024 (2024-03-18), XP091703744, Retrieved from the Internet: URL:https://arxiv.org/pdf/2403.11427> <br> * abstract; figure 2 * <br> * sections 3, 4 * <br> ----- | 1-15 | **TECHNICAL FIELDS SEARCHED (IPC)** <br><br> G06T |
| A | ZHIYIN QIAN ET AL: "3DGS-Avatar: Animatable Avatars via Deformable 3D Gaussian Splatting", ARXIV.ORG, CORNELL UNIVERSITY LIBRARY, 201 OLIN LIBRARY CORNELL UNIVERSITY ITHACA, NY 14853, <br> 4 April 2024 (2024-04-04), XP091719015, Retrieved from the Internet: URL:https://arxiv.org/pdf/2312.09228> <br> * abstract; figure 2 * <br> * sections 3, 4 * <br> ----- | 1-15 | |

The present search report has been drawn up for all claims

| Place of search | Date of completion of the search | Examiner |
|---|---|---|
| Berlin | 15 December 2025 | Bouchaâla, Nicolas |

EPO FORM 1503 03.82 (P4C01)

## ANNEX TO THE EUROPEAN SEARCH REPORT
## ON EUROPEAN PATENT APPLICATION NO.

EP 25 20 0417

15-12-2025

| Patent document cited in search report | | Publication date | Patent family member(s) | | Publication date |
|---|---|---|---|---|---|
| US 11557074 | B1 | 17-01-2023 | US | 11557074 B1 | 17-01-2023 |
| | | | US | 11748930 B1 | 05-09-2023 |
| | | | WO | 2024044078 A1 | 29-02-2024 |
| US 2017046865 | A1 | 16-02-2017 | NONE | | |